# NEUE EUROPÄISCHE PATENTSCHRIFT

(11) **EP 3 071 853 B2**
(45) Veröffentlichungstag und Bekanntmachung des Hinweises auf die Entscheidung über den Einspruch: **02.12.2020**
(45) Hinweis auf die Patenterteilung: 27.09.2017
(21) Anmeldenummer: 14802309.6
(22) Anmeldetag: 29.10.2014
(51) Int. Cl.: F16D 25/12, F16D 25/08, F16J 15/32

(54) **KOLBEN-ZYLINDER-ANORDNUNG FÜR EINE AUSRÜCKEINHEIT, INSBESONDERE FÜR EINEN GEBERZYLINDER EINER HYDRAULISCHEN KUPPLUNGSBETÄTIGUNGSEINRICHTUNG**
PISTON-CYLINDER ARRANGEMENT FOR A DISENGAGEMENT UNIT, IN PARTICULAR FOR A MASTER CYLINDER OF A HYDRAULIC CLUTCH ACTUATION DEVICE
ENSEMBLE PISTON-CYLINDRE POUR UNITÉ DE DÉBRAYAGE, EN PARTICULIER POUR MAÎTRE-CYLINDRE D'UN MOYEN D'ACTIONNEMENT D'EMBRAYAGE HYDRAULIQUE

(30) Priorität: 19.11.2013 DE 102013223511
(43) Veröffentlichungstag der Anmeldung: 28.09.2016
(73) Patentinhaber: Schaeffler Technologies AG & Co. KG, 91074 Herzogenaurach (DE)
(72) Erfinder: STEHR, Reinhard, 77815 Bühl (DE); GORBUNOV, Alexander, 77815 Bühl (DE); GLEBOV, Alexander, 77815 Bühl (DE); FRANZ, Viktor, 76137 Karlsruhe (DE)
(86) Internationale Anmeldenummer: PCT/DE2014/200609
(87) Internationale Veröffentlichungsnummer: WO 2015/074655

(56) Entgegenhaltungen:
- EP-A1- 0 778 425
- EP-A1- 1 767 837
- EP-A2- 1 526 066
- WO-A1-2009/035947
- DE-A1- 10 160 973
- DE-A1-102009 021 902
- DE-C2- 4 339 652
- GB-A- 2 077 882

## Beschreibung

Die Erfindung betrifft eine Kolben-Zylinder-Anordnung für eine Ausrückeinheit, insbesondere für einen Geberzylinder einer hydraulischen Kupplungsbetätigungseinrichtung, umfassend einen als Gehäuse ausgebildeten Zylinder, welcher einen ringförmigen Druckraum aufspannt, in dem ein Kolben axial beweglich gelagert ist, wobei der Kolben gegenüber dem Druckraum über mindestens eine Dichtung abgedichtet ist.

Hydraulische Geberzylinder, wie sie in Kupplungsbetätigungseinrichtungen Anwendung finden, bestehen aus einem Zylinder, welcher als Gehäuse ausgebildet ist. Dieses Gehäuse bildet einen ringförmigen Druckraum aus, in dem ein Kolben axial beweglich gelagert ist. Um den Kolben gegenüber dem in dem Druckraum befindlichen Hydraulikmedium abzudichten, ist der Kolben mit mindestens einer Dichtung versehen. Bei der Abdichtung von Ringkolben, welche üblicherweise in hydraulischen Kupplungsbetätigungseinrichtungen eingesetzt werden, kommt es aufgrund von zwei Dichtstellen zusätzlich zu einem Achsversatz der beiden Dichtstellen zueinander. Es wird ein starrer Ring bzw. eine starre Buchse zur Führung des axial beweglichen Kolbens eingesetzt, um die auftretenden Querkräfte, z.B. aus der mechanischen Anbindung des Kolbens oder eines asymmetrischen Strömungsverhältnisses im Zylinder aufzunehmen, so dass dem Kolben im Wesentlichen eine Axialbewegung erlaubt wird. Um die Toleranzen von Kolben und Gehäuse auszugleichen, muss eine solche starre Führungsbuchse mit entsprechendem Radialspiel ausgelegt sein, wodurch aber die axiale Führung eingeschränkt wird. Insbesondere bei tiefen Temperaturen und wechselnden Querkräften kommt es zu einer radialen Bewegung des Kolbens, was die Funktion der Kolbenabdichtung erheblich gefährdet.

Die Schrift EP0778425 A1 offenbart einen Kolben-Zylinder-Anordnung. Der Erfindung liegt somit die Aufgabe zugrunde, eine Kolben-Zylinder-Anordnung anzugeben, bei welcher trotz auftretender Toleranzen der Kolben bei jeglicher Temperatur möglichst spielfrei axial geführt werden kann.

Erfindungsgemäß wird die Aufgabe dadurch gelöst, dass parallel zu der Dichtung in Bewegungsrichtung des Kolbens ein elastisches Führungselement angeordnet ist, welches aus einem Material besteht, das bei einer Abkühlung früher aushärtet als das Material der Dichtung. Insbesondere bei tiefen Temperaturen, wenn das Material der Dichtung etwaigen Querbewegungen kaum noch folgen kann, werden durch das elastische Führungselement die auftretenden Formfehler in dem Führungselement "eingefroren", so dass eine ungehinderte spielfreie axiale Bewegung des Kolbens möglich ist. Aufgrund seiner Elastizität kann das Führungselement Formfehler der beteiligten Partner Kolben und Gehäuse störungsfrei ausgleichen. Dadurch, dass das Führungselement früher verhärtet als das Material der Dichtung wird die Dichtung in ihrem verhärteten Zustand vor schädlichen Querbewegungen geschützt.

Vorteilhafterweise besteht das elastische Führungselement aus einem Elastomer, dessen Glasübergangstemperatur über der Glasübergangstemperatur des Materials der Dichtung liegt. Unter der Glasübergangstemperatur soll dabei eine Umgebungstemperatur verstanden werden, unter welcher das Elastomer allmählich spröde wird und seine Federwirkung einstellt. Die Einstellung der Federwirkung ist insbesondere dadurch gekennzeichnet, dass ein Zurückfedern in einen ursprünglichen Ausgangszustand sehr langsam erfolgt. Durch den Einsatz des elastischen Führungselementes aus einem wenig kalt-elastischen Elastomer können also die Formfehler bei Wärme federnd ausgeglichen werden, während bei tiefen Temperaturen eine nahezu spielfreie Lagerung der Translationsbewegung des Kolbens die Dichtung vor schädlichen Querbewegungen schützt.

Das elastische Führungselement ist an einem, am Gehäuse befestigten Zwischenträger, dem Kolben zugewandt, angeordnet. Auch hierbei wird sichergestellt, dass sowohl die Dichtung ihre Dichtaufgabe ermöglicht, als auch die Axialbewegung des Kolbens auch bei tiefen Temperaturen ausreichend gesichert wird.

In einer Variante ist das elastische Führungselement gegen das Gehäuse und/oder den Kolben radial vorgespannt. Aufgrund dieser radialen Vorspannung lassen sich die Formfehler, die durch Kolben bzw. Gehäuse verursacht werden, "gutmütig" ausgleichen. Für einen solchen Ausgleich reicht schon eine leichte radiale Vorspannung aus.

Das elastische Führungselement ist ringförmig ausgebildet und liegt auf dem ringförmigen Zwischenträger auf, wobei mindestens eine Ausnehmung des Zwischenträgers eine Anlagefläche des Führungselementes an dem Zwischenträger unterbricht. Diese Unterbrechung unterstützt insbesondere den freien Druckausgleich zwischen Kolben und Gehäuse.

In einer Ausführungsform besteht der als Gehäuse ausgebildete Zylinder aus einem Kunststoff. Insbesondere bei Kunststoffgehäusen sind die auftretenden Querkräfte besonders hoch, da Kunststoff leicht, insbesondere bei unterschiedlichen Temperaturen, zu verformen ist. Deshalb sind bei einem Kunststoffgehäuse die Sitzflächen der Dichtung besonders hinsichtlich ihrer Rundheit und Koaxialität gefährdet. Durch den Einsatz des bei tiefen Temperaturen eher als das Dichtungsmaterial aushärtenden Führungselementes wird die radiale Bewegung des Kolbens, welche auf wechselnde Querkräfte zurückzuführen ist, unterbunden, wodurch die Funktion der Kolbenabdichtung gewährleistet bleibt.

Die Erfindung lässt zahlreiche Ausführungsformen zu. Eine davon soll anhand der in der Zeichnung dargestellten Figuren näher erläutert werden.

Es zeigen:
- Figur 1: ein Ausführungsbeispiel einer erfindungsgemäßen Kolben-Zylinder-Anordnung,
- Figur 2: einen Schnitt durch das Ausführungsbeispiel der erfindungsgemäßen Kolben-Zylinder-Anordnung gemäß Figur 1,
- Figur 3: Darstellung des Führungsringes auf dem Zwischenträger.

Gleiche Merkmale sind mit gleichen Bezugszeichen gekennzeichnet.

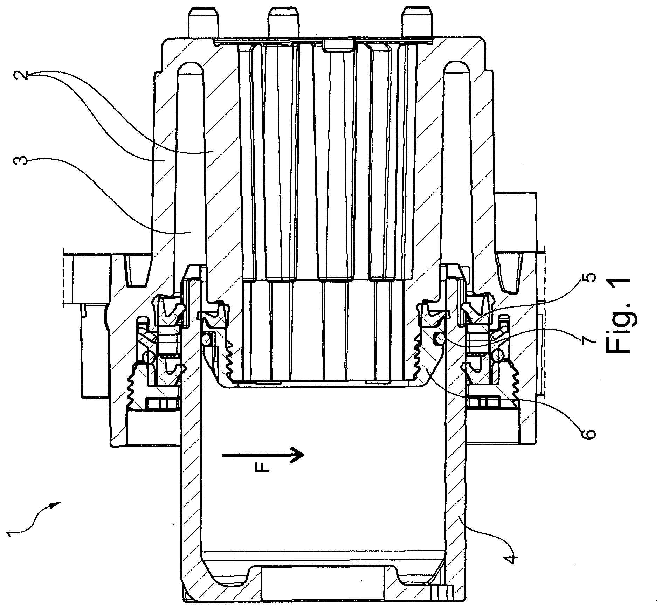

In Figur 1 ist ein Geberzylinder 1 einer hydraulischen Kupplungsbetätigungseinrichtung dargestellt, bei welchem der Zylinder als Gehäuse 2 ausgebildet ist, wobei das Gehäuse 2 einen ringförmigen Druckraum 3 aufspannt, in dem ein Hydraulikmedium enthalten ist. Dabei wird ein Kolben 4 axial bewegt, welcher in dem Druckraum 3 gelagert ist. Der Kolben 4 wird von einem nicht weiter dargestellten Spindelaktor betätigt und verschiebt das Hydraulikmedium aus dem Druckraum in eine Hydraulikleitung. Der Kolben 4 ist gegenüber dem Druckraum 3 mit mindestens einer ringförmigen Dichtung 5 abgedichtet. Es besteht auch die Möglichkeit, wie in Figur 1 dargestellt, dass ein Doppeldichtring verwendet wird.

Die Dichtung 5 ist ebenfalls ringförmig ausgebildet, wodurch sich zwei Dichtstellen ergeben. An dem Gehäuse 2 ist ein ringförmiger Zwischenträger 6 angeordnet, auf welchem ein Führungselement 7, vorzugsweise ein O-Ring, gelagert ist, der aus einem relativ weichen Material, vorzugsweise einem Elastomer, besteht. Dieses Führungselement 7 ist dabei parallel zu der ringförmigen Dichtung 5 angeordnet und dem Kolben 4 zugewandt. Der Zwischenträger 6 ist als Mutter ausgebildet, welche gegen die Dichtung 5 verschraubt ist. Der Zwischenträger 6 weist eine Ausnehmung 8 auf, in welcher die Anlagefläche des elastischen Führungselementes 7 gegenüber dem Zwischenträger 6 unterbrochen ist. Auf Grund der Ausbildung des Zwischenträgers 6 als Mutter kann die Ausnehmung 8 gleichzeitig zur Aufnahme eines Werkzeuges, vorzugsweise eines Steckschlüssels zum Anziehen der Mutter verwendet werden.

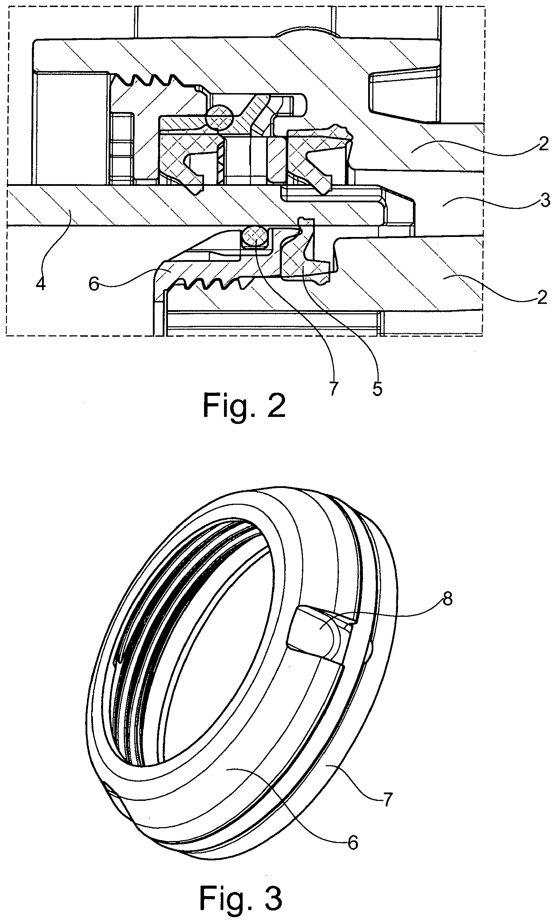

Figur 2 zeigt noch einmal einen Ausschnitt aus dem Geberzylinder 1, wie er in Figur 1 dargestellt ist. Figur 3 zeigt die Anordnung des Führungselementes 7 an dem Zwischenträger 6, wobei die Ausnehmung 8 des Zwischenträgers 6 verdeutlicht ist, an welcher die Anlagefläche des Führungselementes 7 am Zwischenträger 6 unterbrochen ist. Das heißt, an dieser Stelle ist das Führungselement 7 nicht dicht, so dass hier kein Druck auf die Dichtung 5 ausgeübt wird.

Infolge des Antriebs des Kolbens 4 durch den Spindelaktor treten starke Querkräfte, welche in Figur 1 durch den Pfeil F verdeutlicht sind, auf und wirken auf die Sitzfläche der Dichtung 5, so dass diese nicht ausreichend rund und koaxial ist. Um bei tiefen Temperaturen die Wirkung der Querkräfte F auf die Dichtung 5 zu unterbinden, ist das Führungselement 7 aus einem solchen Elastomer ausgebildet, das eine Glasübergangstemperatur aufweist, die über der Glasübergangstemperatur des Materials der Dichtung 5 liegt. Dies führt dazu, dass das Führungselement 7 bei tiefen Temperaturen wesentlich eher aushärtet als die Dichtung 5. Um die Querkräfte ausreichend aufnehmen zu können, weist das Führungselement 7 eine leichte Vorspannung sowohl gegenüber dem Gehäuse 2 als auch gegenüber dem Kolben 4 auf, so dass dieser in allen Toleranzlagen und bei allen Betriebstemperaturen seine Wirkung entfalten kann.

Durch das frühzeitige Aushärten friert das Führungselement 7 die augenblicklichen Verformungsverhältnisse zwischen Kolben 4 und Gehäuse 2 ein, so dass die Dichtung 5 in ihrem verhärteten Zustand, in welchem diese ihre Elastizität verliert und Querkräfte nicht mehr ausgleichen kann, vor schädlichen Querbewegungen geschützt wird. Somit wird auch bei tiefen Temperaturen eine ausreichende Abdichtung des Kolbens 4 gegenüber dem Druckraum 3 sichergestellt, wobei gleichzeitig die axiale Bewegung des Kolbens 4 jederzeit gewährleistet wird.

## Patentansprüche

1. Kolben-Zylinder-Anordnung für eine Ausrückeinheit, insbesondere für einen Geberzylinder einer hydraulischen Kupplungsbetätigungseinrichtung, umfassend einen als Gehäuse (2) ausgebildeten Zylinder, welcher einen ringförmigen Druckraum (3) aufspannt, in dem ein Kolben (4) axial beweglich gelagert ist, wobei der Kolben (4) gegenüber dem Druckraum (3) über mindestens eine Dichtung (5) abgedichtet ist, wobei parallel zu der Dichtung (5) in Bewegungsrichtung des Kolbens (4) ein elastisches Führungselement (7) angeordnet ist, welches aus einem Material besteht, das bei einer Abkühlung früher aushärtet als ein Material der Dichtung (5),
wobei das elastische Führungselement (7) an einem, am Gehäuse (2) befestigten Zwischenträger (6), dem Kolben (4) zugewandt, angeordnet ist,
wobei das elastische Führungselement (7) ringförmig ausgebildet ist und auf dem ringförmigen Zwischenelement (6) aufliegt, und wobei mindestens eine Ausnehmung (8) des Zwischenträgers (6) eine Anlagefläche des Führungselementes (7) an dem Zwischenträger (6) unterbricht.

2. Kolben-Zylinder-Anordnung nach Anspruch 1, **dadurch gekennzeichnet, dass** das elastische Führungselement (7) aus einem Elastomer besteht, dessen Glasübergangstemperatur über einer Glasübergangstemperatur des Materials der Dichtung (5) liegt.

3. Kolben-Zylinder-Anordnung nach einem der vorhergehenden Ansprüche, **dadurch gekennzeichnet, dass** das elastische Führungselement gegen das Gehäuse und/oder den Kolben radial vorgespannt ist.

4. Kolben-Zylinder-Anordnung nach einem der vorhergehenden Ansprüche, **dadurch gekennzeichnet, dass** der als Gehäuse (2) ausgebildete Zylinder aus einem Kunststoff besteht.

## Claims

1. Piston/cylinder arrangement for a release unit, in particular for a master cylinder of a hydraulic clutch actuation device, comprising a cylinder which is configured as a housing (2) and defines an annular pressure space (3), in which a piston (4) is mounted such that it can be moved axially, the piston (4) being sealed with respect to the pressure space (3) via at least one seal (5), an elastic guide element (7) being arranged parallel to the seal (5) in the movement direction of the piston (4), which guide element (7) consists of a material which hardens earlier in the case of cooling than a material of the seal (5), the elastic guide element (7) being arranged, so as to face the piston (4), on an intermediate carrier (6) which is fastened to the housing (2), the elastic guide element (7) being of annular configuration and lying on the annular intermediate element (6), and at least one recess (8) of the intermediate carrier (6) interrupting a bearing face of the guide element (7) on the intermediate carrier (6).

2. Piston/cylinder arrangement according to Claim 1, **characterized in that** the elastic guide element (7) consists of an elastomer, the glass transition temperature of which lies above a glass transition temperature of the material of the seal (5).

3. Piston/cylinder arrangement according to either of the preceding claims, **characterized in that** the elastic guide element is prestressed radially against the housing and/or the piston.

4. Piston/cylinder arrangement according to one of the preceding claims, **characterized in that** the cylinder which is configured as a housing (2) consists of a plastic.

## Revendications

1. Agencement cylindre-piston pour une unité de débrayage, en particulier pour un maître-cylindre d'un dispositif d'actionnement d'embrayage hydraulique, comprenant un cylindre réalisé sous forme de boîtier (2) qui couvre un espace de pression (3) de forme annulaire dans lequel un piston (4) est supporté de manière déplaçable axialement, le piston (4) étant étanchéifié par rapport à l'espace de pression (3) par le biais d'au moins un joint d'étanchéité (5), un élément de guidage élastique (7) étant disposé parallèlement au joint d'étanchéité (5) dans la direction de déplacement du piston (4), lequel élément de guidage élastique se compose d'un matériau qui, dans le cas d'un refroidissement, durci plus vite qu'un matériau du joint d'étanchéité (5),
l'élément de guidage élastique (7) étant disposé au niveau d'un support intermédiaire (6) fixé au boîtier (2), tourné vers le piston (4),
l'élément de guidage élastique (7) étant réalisé sous forme annulaire et reposant sur l'élément intermédiaire de forme annulaire (6) et au moins un évidement (8) du support intermédiaire (6) interrompant une surface d'appui de l'élément de guidage (7) sur le support intermédiaire (6).

2. Agencement cylindre-piston selon la revendication 1, **caractérisé en ce que** l'élément de guidage élastique (7) se compose d'un élastomère dont la température de transition vitreuse est supérieure à une température de transition vitreuse du matériau du joint d'étanchéité (5).

3. Agencement cylindre-piston selon l'une quelconque des revendications précédentes, **caractérisé en ce que** l'élément de guidage élastique est précontraint radialement par rapport au boîtier et/ou au piston.

4. Agencement cylindre-piston selon l'une quelconque des revendications précédentes, **caractérisé en ce que** le cylindre réalisé en tant que boîtier (2) se compose d'une matière plastique.
